## Europäisches Patentamt
## European Patent Office
## Office européen des brevets

(19)

(11) Veröffentlichungsnummer : **0 065 021**
**B1**

(12) # EUROPÄISCHE PATENTSCHRIFT

(45) Veröffentlichungstag der Patentschrift :
**17.10.84**

(21) Anmeldenummer : **81103759.7**

(22) Anmeldetag : **15.05.81**

(51) Int. Cl.³ : **H 01 G   9/10, H 01 G   9/12, H 01 G   1/02**

(54) **Verbundabdeckscheibe und deren Verwendung. .**

(43) Veröffentlichungstag der Anmeldung :
**24.11.82 Patentblatt 82/47**

(45) Bekanntmachung des Hinweises auf die Patenterteilung : **17.10.84 Patentblatt 84/42**

(84) Benannte Vertragsstaaten :
**AT BE CH DE FR GB IT LI NL SE**

(56) Entgegenhaltungen :
**DE-A- 2 902 069**
**DE-B- 1 113 755**
**DE-C-   598 568**
**FR-A- 1 509 434**
**FR-A- 2 388 388**
**US-A- 2 884 575**
**US-A- 3 301 270**

(73) Patentinhaber : **WOCO Franz-Josef Wolf & Co.**
**Sprudelallee 19**
**D-6483 Bad Soden-Salmünster (DE)**

**Klaschka, Rudolf**
**Tannenweg 9**
**D-7896 Wutöschingen 3 (DE)**

(72) Erfinder : **Klaschka, Rudolf**
**Tannenweg 9**
**D-7896 Wutöschingen 3 (DE)**
Erfinder : **Wolf, Franz Josef**
**Sprudelallee 19**
**D-6483 Bad Soden-Salmünster (DE)**

(74) Vertreter : **Jaeger, Klaus, Dr.rer.nat. Dipl.-Chem. et al**
**Jaeger, Grams & Pontani Patentanwälte Bergstrasse**
**48 1/2**
**D-8035 München-Gauting (DE)**

**Beschreibung**

Die Erfindung betrifft eine Verbundabdeckscheibe für Gehäuse von elektrischen Bauteilen, insbesondere für ein aus Metall bestehendes einseitig offenes Bechergehäuse eines elektrischen Kondensators.

Abdeckscheiben zum Verschließen des Gehäuses eines elektrischen Kondensators werden überwiegend aus Kunststoff in Verbindung mit gummielastischem Dichtungselementen hergestellt. Solche Abdeckscheiben sind jedoch nur bis zu Temperaturen von ungefähr 100 °C einsetzbar, da der Kunststoff der Abdeckscheibe bei höheren Temperaturen bereits zu weich wird und nicht mehr ausreichend formbeständig ist. Außerdem nimmt die Permeationsfestigkeit der Kunststoffscheibe gegenüber Gasen und Flüssigkeiten bei höheren Temperaturen rasch ab.

Diese Probleme treten nicht auf bei solchen Abdeckscheiben, die in Verbindung mit gummielastischen Dichtungselementen im wesentlichen aus Aluminium bestehen. Bei solchen Aluminiumscheiben treten jedoch Probleme hinsichtlich der elektrischen Isolation auf, und zwar sowohl hinsichtlich der elektrischen Isolation gegenüber dem metallischen Bechergehäuse des Kondensators als auch hinsichtlich der elektrischen Anschlußdurchführungen. Diese elektrischen Isolationsprobleme liegen dagegen bei der Kunststoffscheibe nicht vor.

Aufgrund dieser Situation sind verschiedene Abdeckscheiben bekanntgeworden, die aus einem Verbund aus verschiedenen Werkstoffen, insbesondere aus Gummi, Kunststoff und Aluminium, bestehen. Mit keiner der bekannten Verbundscheiben konnten jedoch alle an solche Abdeckscheiben gestellten Anforderungen zufriedenstellend gelöst werden.

Im nicht vorveröffentlichten Stand der Technik WO 81/02219 ist eine Verbundabdeckscheibe für das Gehäuse eines elektrischen Bauteils, insbesondere für ein aus Metall bestehendes einseitig offenes Bechergehäuse eines elektrischen Kondensators beschrieben, die aus einer einseitig auf einer Oberfläche im wesentlichen vollständig, um den Außenrand herum und auf der gegenüberliegenden Oberfläche im Randbereich gummierten, und zwar insgesamt zusammenhängend gummierten Aluminiumscheibe und einer Kunststoffscheibe besteht und eine auch bei Druckbeaufschlagung gegen Gaspermeation und Flüssigkeitspermeation dichte elektrische Durchführung aufweist. Das sich zum Kondensatorinneren erstreckende Durchführungselement ist einstückig aus der Aluminiumscheibe ausgebildet. Die Kunststoffscheibe liegt auf der gummierten Oberfläche der Aluminiumscheibe auf. Die freie, nur im peripheren Randbereich gummierte Oberfläche der Aluminiumscheibe steht zur Herstellung elektrischer Außenanschlüsse zur Verfügung. Durch eine am Durchführungselement ausgebildete und als Sperrelement wirkende Verstärkung werden die gummierte Aluminiumscheibe und die Kunststoffscheibe unter Bildung eines festen Verbundes, nämlich unter Bildung der Verbundabdeckscheibe, in Richtung ihrer Normalen flächig gegeneinander gezwungen.

Ungelöst ist bei dieser Ausbildung der Scheibe das Problem, wie diese Scheibe mit mehreren elektrisch gegeneinander isolierten Durchführungen versehen werden kann. Weiterhin ist auch die Ausbildung von Überdrucksicherungen in dieser Scheibe nicht ganz unproblematisch.

Der Erfindung liegt die Aufgabe zugrunde, eine Verbundabdeckscheibe der vorstehend beschriebenen Art zu schaffen, die auch mehrere elektrisch zuverlässig gegeneinander isolierte Durchführungen aufweisen kann und in der ohne technischen Aufwand und ohne Mehrkosten ein zuverlässiges Überdruck-Sicherheitsventil angeordnet werden kann.

Zur Lösung dieser Aufgabe wird eine Verbundabdeckscheibe der im Oberbegriff des Anspruchs 1 beschriebenen Art geschaffen, die erfindungsgemäß dadurch gekennzeichnet ist, daß die Kunststoffscheibe auf der nicht gummierten Oberfläche der Aluminiumscheibe flächig aufliegt und daß der Außenrand der Kunststoffscheibe zumindest im wesentlichen bündig vom Innenrand der Randbereichsgummierung der Aluminiumscheibe auf dieser Oberfläche umschlossen ist.

Die Verbundabdeckscheibe der Erfindung ist also zunächst im wesentlichen durch die Anordnung der drei Werkstoffschichten oder Werkstoffscheiben zueinander gekennzeichnet, nämlich durch die Werkstoffolge Gummi/Aluminium/Kunststoff. Mit anderen Worten, die Verbundabdeckscheibe ist zunächst erfindungswesentlich dadurch gekennzeichnet, daß die Aluminiumscheibe sandwichartig zwischen eine Gummischicht und eine Kunststoffscheibe eingefügt ist, wobei die Gummischicht den Außenrand der Aluminiumscheibe vollständig umgreift und den Außenrand der Kunststoffscheibe zumindest im wesentlichen bündig umschließt. Die elektrisch leitfähige Aluminiumscheibe ist also auf ihren beiden Hauptoberflächen praktisch vollständig von einem elektrisch isolierenden Werkstoff bedeckt, und zwar auf ihrer einen Oberfläche von einem Elastomer und auf der gegenüberliegenden Oberfläche von einem formbeständigen steifen Kunststoff.

In diesem Werkstoffverbund der Verbundabdeckscheibe dient das Elastomer der permeationsfesten Abdichtung und der elektrischen Isolation sowohl der elektrischen Durchführungen in der Scheibe als auch der Scheibe insgesamt gegen das Bechergehäuse des elektrischen Bauelementes.

Die Aluminiumscheibe bewirkt, daß die Verbundabdeckscheibe auch noch bei vergleichsweise sehr hohen Temperaturen, d. h. bei Temperaturen im Bereich von über 125 °C, noch vollständig permeationsfest und formbeständig ist, und zwar selbst unter relativ großen Innendrücken im verschlossenen Bechergehäuse, d. h. bei Drücken, die auch größer als 10 bar sein können.

Die Kunststoffscheibe dient schließlich der elektrischen Isolation sowohl der elektrischen Durchführungen durch die Verbundabdeckscheibe gegeneinander als auch der elektrischen Isolation der Verbundabdeckscheibe insgesamt gegenüber dem im Bechergehäuse angeordneten elektrischen Bauelement, beispielsweise dem kapazitiven Element eines elektrischen Kondensators.

Für die Gummierung der Aluminiumscheibe werden Werkstoffe verwendet, die zu diesem Zweck an sich bekannt und gebräuchlich sind, insbesondere schwefelfrei vernetzte synthetische Elastomere. Vorzugsweise werden peroxidisch vernetztes EPDM (Ethylen-Propylen-Dien-Terpolymerisat) oder Butylkautschuk eingesetzt.

Die die mittlere Scheibe oder Schicht der Verbundabdeckscheibe bildende Metallscheibe kann prinzipiell aus beliebigem korrosionsfestem Metall bestehen, wird jedoch aus Gründen der elektrischen Kenndaten und aus Preis- und Gewichtsgründen praktisch stets aus Aluminium oder einer Aluminiumlegierung bestehen. Diese Scheibe ist daher im Rahmen der Beschreibung auch kurz als « Aluminiumscheibe » bezeichnet. Vorzugsweise wird zur Herstellung dieser Scheibe ein Werkstoff verwendet, der zu mindestens 99 % aus Aluminium besteht.

Die Kunststoffscheibe der Verbundabdeckscheibe kann ebenfalls aus Werkstoffen hergestellt werden, die zum Verschließen der Gehäuse elektrischer Bauteile an sich bekannt und gebräuchlich sind. Solche Kunststoffwerkstoffe müssen vor allem bis zu hohen Temperaturen formbeständig sein, sollten nicht porös sein und müssen insbesondere korrosionsbeständig sein, d. h. müssen sich vollständig inert verhalten gegenüber allen in dem zu verschließenden Gehäuse eingeschlossenen Komponenten und Werkstoffen, im Fall von Kondensatoren also insbesondere gegenüber den flüssigen Elektrolyten und Isolationsölen. Vorzugsweise wird die Kunststoffscheibe aus Polyamid, insbesondere glasfaserverstärktem Polyamid hergestellt.

Das elektrische Durchführungselement kann, wenn nur eine Durchführung durch die Verbundabdeckscheibe vorzusehen ist, einstückig mit der Aluminiumscheibe ausgebildet sein. In diesem Fall kann das Durchführungselement Rastvorsprünge aufweisen, über die die Kunststoffscheibe unter Bildung einer einrastenden Schnappverbindung auf die Aluminiumscheibe gedrück werden kann. Alternativ kann das einstückig mit der Aluminiumscheibe ausgebildete elektrische Durchführungselement nach Aufstecken der Kunststoffscheibe nach Art einer Nietung so verformt werden, daß die Kunststoffscheibe auf die Aluminiumscheibe gezwungen wird. Vorzugsweise ist das Durchführungselement jedoch als separater Niet ausgebildet, dessen Kopf oder Kopfflansch dichtend auf der gummierten Oberfläche der Aluminiumscheibe aufliegt, dessen Schaft Öffnungen in der Aluminiumscheibe und in der Kunststoffscheibe durchgreift und dessen Fuß auf der freien Oberfläche der Kunststoffscheibe so vernietet ist, daß die Kunststoffscheibe flächig auf die Aluminiumscheibe gezwungen wird. Dabei ist der Durchmesser der Durchführungsöffnung in der Aluminiumscheibe, durch die das Durchführungselement hindurchgreift, größer als der Durchmesser des Durchführungselementes bzw. des Durchführungsnietes, und zwar um so viel größer, daß eine zuverlässige elektrische Isolierung zwischen dem Durchführungselement und der Aluminiumscheibe gewährleistet ist. Gleichzeitig ist der Durchmesser der Durchführungsöffnung in der Kunststoffscheibe so bemessen, daß sie vom Durchführungselement paßgenau durchsetzt wird.

Zur Verbesserung der elektrischen Isolation zwischen einem nietartigen oder in anderer Weise als separates Element ausgebildeten Durchführungselement und der Aluminiumscheibe ist die Gummierung der Oberfläche der Aluminiumscheibe vorzugsweise bis in den Rand der Durchführungsöffnung hinein herumgezogen und kann die Rückseite der Aluminiumscheibe zur Stabilisierung zumindest sektorweise hintergreifen, wozu in der an dieser blanken Aluminiumfläche anliegenden Kunststoffscheibe komplementäre Ausnehmungen ausgebildet sind. Der im entspannten Zustand von der Gummierung freigelassene lichte Durchmesser der Durchführungsöffnung ist insbesondere etwas kleiner als der Durchmesser des Durchführungselementes an dieser Stelle, so daß die Gummierung beim Einstecken des Durchführungselementes während der Montage der Verbundabdeckplatte das Elastomer in der Durchführungsöffnung geringfügig verpreßt, wobei neben der elektrischen Isolation gleichzeitig eine zusätzliche Dichtung zwischen dem Durchführungselement und dem Innenrand der Durchführungsöffnung in der Aluminiumscheibe herbeigeführt wird. Ungeachtet dieser zusätzlichen Dichtwirkung erfolgt jedoch die eigentliche Dichtwirkung dadurch, daß das Durchführungselement mit seiner abstützenden Kopffläche fest auf die Elastomerschicht auf der vollflächig gummierten Seite der Aluminiumscheibe gezwungen wird. Zu diesem Zweck kann die Auflagefläche am Kopf des Durchführungselementes zusätzlich mit geschlossen in sich umlaufenden vorstehenden Dichtkanten ausgebildet sein, die in die Elastomerschicht eingepreßt sind.

Um auf einfache und herstellungstechnisch preiswerte Weise zu verhindern, daß sich die Durchführungselemente, insbesondere beim Herstellen der elektrischen Anschlüsse durch Schraubverbindungen, in den Durchführungsöffnungen verdrehen, sind auf der freien Oberfläche der Kunststoffscheibe um die Durchführungsöffnungen herum jeweils mindestens eine, in der Regel drei Ausnehmungen ausgebildet, in die hinein der Fuß des bei dieser Ausgestaltung der Erfindung als Niet ausgebildeten Durchführungselementes formschlüssig niedergenietet oder durch entsprechende Formgebung eingebracht ist. Gleichzeitig sind die aufeinanderliegenden Oberflächen der Aluminiumscheibe und der Kunststoffscheibe durch formschlüssig ineinandergreifende und zueinander komplementäre Vorsprünge und Rücksprünge gegen jede Relativbewegung gegeneinander in ihrer Berührungsebene blockiert. Auf diese Weise können separat ausgebildete Durchführungselemente zuverlässig drehfest in der Verbundabdeckscheibe gesichert werden.

Zur Verfestigung der Struktur sind entsprechende formschlüssig im Eingriff stehende Vorsprünge und Rücksprünge auch zwischen der Oberfläche der Aluminiumscheibe und der auf dieser Oberfläche angebrachten Elastomerschicht oder Elastomerscheibe vorgesehen. In der Praxis werden also solche Vorsprünge und/oder Rücksprünge auf der Oberfläche der Aluminiumscheibe ausgebildet, die in einem ersten Arbeitsgang mit dem Elastomer umspritzt wird, wobei dieses Umspritzen nach an sich bekannten Verfahren, insbesondere nach dem Verfahren des Spritzgießens oder Formpressens erfolgen kann. Alternativ kann die Gummischicht selbstverständlich auch separat vorgefertigt und dann als Fertigteil auf die Aluminiumscheibe aufgezogen oder aufgeknöpft werden.

Die Verbundabdeckscheibe der Erfindung kann prinzipiell mit jedem beliebigen an sich bekannten Ventil oder ventilartig wirkenden Mittel ausgerüstet werden, das beim Überschreiten eines vorgegebenen kritischen Grenzdrucks im Inneren des mit der Verbundabdeckscheibe verschlossenen Gehäuses öffnet. Vorzugsweise ist die Verbundabdeckscheibe jedoch mit einem Berstmembranventil ausgerüstet, dessen Berstmembran die Gummierung der Aluminiumscheibe selbst, bzw. ein geschwächter Bereich dieser Gummierung, ist. Zu diesem Zweck ist in der Aluminiumscheibe eine durchgehende Öffnung ausgebildet, die im folgenden kurz als « Ventilöffnung » bezeichnet ist. Die Ventilöffnung ist vollständig von der Gummierung überdeckt, wobei die Elastomerschicht im Bereich der Ventilöffnung geschwächt ist, um ein Öffnen des Berstventils in dem vorgegebenen Druckbereich um 10 bar zu öffnen. Die Schwächung der Elastomerschicht erfolgt dabei in der Weise, daß die freie Oberfläche der Gummierung der Verbundabdeckscheibe unverändert plan bleibt und die Schwächung von der Aluminiumscheibe her vorgenommen wird. Um beim Entstehen eines Überdrucks von der Seite der Ventilöffnung der Aluminiumscheibe her zu gewährleisten, daß tatsächlich die stehenbleibende Elastomermembran einreißt und nicht die Gummierung insgesamt von der Aluminiumscheibe abgehoben wird, ist die Gummierung vorzugsweise um den Rand der Ventilöffnung herum bis auf einen flanschartigen Kreisringbereich um die Ventilöffnung in der Aluminiumscheibe herum auf der der Kunststoffscheibe zugewandten Oberfläche der Aluminiumscheibe gezogen. Dabei weist die an der freien Aluminiumoberfläche anliegende Kunststoffscheibe in diesem Bereich eine komplementäre Aussparung auf. Zusätzlich ist die dieser kreisringförmigen hintergreifenden Gummierung zugewandte Oberfläche der Aussparung in der Kunststoffscheibe vorzugsweise mit einer in sich geschlossenen umlaufenden hochstehenden Kante ausgebildet, die sich in den Elastomerring einpreßt und das Elastomer dadurch gegen die Oberfläche der Aluminiumscheibe zwingt. Die Gummierung wird so um die Ventilöffnung in der Aluminiumscheibe herum zusätzlich fest und dichtend eingespannt. Ein Abheben der Gummierung insgesamt von der Oberfläche der Aluminiumscheibe ist dadurch ausgeschlossen. Eine weitere Stabilisierung kann dadurch erfolgen, daß in der Kunststoffscheibe ein domartiger Vorsprung ausgebildet ist, der in die Schwächungsausnehmung der Gummierung bis in die Ventilöffnung in der Aluminiumscheibe hinein oder durch diese hindurch greift. Innerhalb dieses domartigen, ebenfalls festklemmend und einspannend wirkenden Vorsprunges ist eine durch die gesamte Kunststoffscheibe durchgehende Bohrung oder Öffnung vorgesehen, die im folgenden ebenfalls als « Ventilöffnung » bezeichnet ist. Die in der Kunststoffscheibe ausgebildete Ventilöffnung stellt die Verbindung zwischen der Berstventilmembran und dem Inneren des mit dieser Abdeckscheibe verschlossenen Gehäuses her. Die Ventilöffnung in der Kunstschoffscheibe ist koaxial zur Ventilöffnung in der Aluminiumscheibe angeordnet, weist jedoch einen wesentlich kleineren Querschnitt als die Ventilöffnung in der Aluminiumscheibe auf.

Unabhängig von der Ausbildung eines Ventils in der Verbundabdeckscheibe wird diese Verbundabdeckscheibe vorzugsweise so verwendet, daß bei einem bestimmungsgemäß mit dieser Verbundabdeckscheibe verschlossenen Gehäuse die Kunststoffscheibe zum Inneren des verschlossenen Gehäuses weist. Diese Anordnung wird aus dem Grunde vorgezogen, weil Kunststoffe in aller Regel gegenüber den insbesondere in Kondensatoren verwendeten aggressiven Medien die deutlich größere Korrosionsbeständigkeit gegenüber den heute bekannten Elastomerqualitäten besitzt.

Die Erfindung ist im folgenden anhand eines Ausführungsbeispiels in Verbindung mit der Zeichnung näher erläutert.

Es zeigen :

Figur 1 ein Ausführungsbeispiel der Verbundabdeckscheibe in Untersicht, d. h. in Draufsicht auf die Kunststoffscheibe ;

Figur 2 einen Schnitt nach II-II in Fig. 1 ;

Figur 3 einen Schnitt nach III-III in Fig. 1 ; und

Figur 4 das in Fig. 1 gezeigte Ausführungsbeispiel in Draufsicht auf die Elastomerschicht.

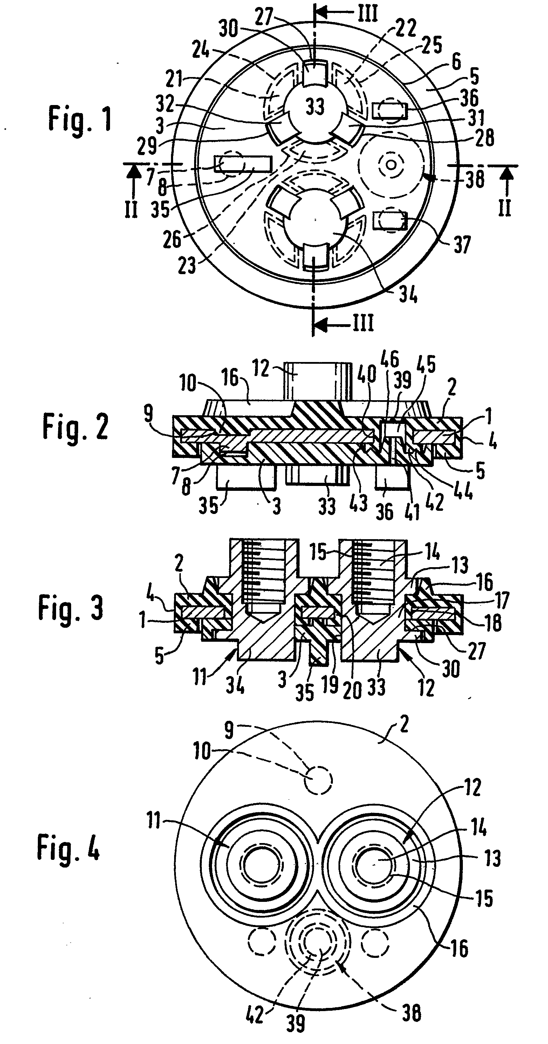

Die in den Figuren 1 bis 4 gezeigte Verbundabdeckscheibe besteht aus einer Aluminiumscheibe 1, die zwischen einer Elastomerschicht 2 und einer Kunststoffscheibe 3 angeordnet ist. Die Elastomerschicht 2 ist durch Gummieren der Aluminiumscheibe1 nach dem Spritzgießverfahren auf die Aluminiumscheibe 1 aufvulkanisiert. Die Elastomerschicht 2 greift mit einem Randbereich 4 um den Außenrand der Aluminiumscheibe 1 herum und erstreckt sich bis auf einen kreisringförmigen Randbereich 5 auf der in den Figuren 2 und 3 nach unten weisenden Unterseite der Aluminiumscheibe 1. Die Kunststoffscheibe 3 liegt mit ihrer in den Figuren 2 und 3 nach oben weisenden Oberseite flächenbündig an der Unterseite der Aluminiumscheibe 1 an. Der Außenrand 6 der Kunststoffscheibe 3 ist im wesentlichen bündig von dem ringförmigen Bereich 5 der Gummierung der Aluminiumscheibe 1 umschlossen (Fig. 1).

An der Unterseite der Aluminiumscheibe 1 sind drei zapfenartige Vorsprünge 7 ausgebildet, die formschlüssig in entsprechende zylindrische Ausnehmungen 8 eingreifen, die an der Oberseite der Kunststoffscheibe 3 ausgebildet sind. Entsprechend sind an der Oberseite der Aluminiumscheibe 1 Vertiefungen 9 ausgebildet, die vollständig vom Elastomer 2 ausgefüllt sind, in die also noppenartige Vorsprünge 10 der Gummierung 2 der Aluminiumscheibe 1 eingreifen.

Die Verbundabdeckscheibe ist mit zwei elektrisch gegeneinander und gegen die Aluminiumscheibe 1 isolierten identisch ausgebildeten Durchführungen versehen, deren Durchführungselemente 11, 12 gleich ausgebildet sind, so daß im folgenden nur eine der beiden Durchführungen beschrieben ist.

Das Durchführungselement 12 ist als Niet ausgebildet. Der Kopf des Niets 12 ist als Außenflansch 13 ausgebildet, der auf der Oberfläche der Elastomerschicht 2 aufliegt. Im übrigen ist der Kopf des Durchführungsniets 12 im wesentlichen zylindrisch und mit einer Blindbohrung 14 ausgebildet, in der ein Innengewinde 15 zu Anschlußzwecken vorgesehen ist. Der Außenrand des Kopfflansches 13 ist im wesentlichen bündig mit einem umlaufenden zargenartig hochstehenden Steg 16 umgeben, der einstückig aus dem Elastomer 2 ausgeformt ist. Dieser umschließende Kragen bzw. Rand 16 dient der elektrischen Isolation der Durchführungselemente 11 und 12 voneinander.

Der Schaft 17 des Durchführungsniets 12 greift durch eine Durchführungsöffnung 18 in der Aluminiumscheibe 1 und durch eine Durchführungsöffnung 19 in der Kunststoffscheibe 3 hindurch. Der Durchmesser der Durchführungsöffnung 18 ist wesentlich größer als der Druchmesser des Nietschafts 17 an dieser Stelle, während der Durchmesser der Durchführungsöffnung 19 so bemessen ist, daß die Durchführungsöffnung 19 den Schaft 17 des Durchführungselementes 12 paßgenau umschließt. Die Gummierung 2 der Aluminiumscheibe 1 erstreckt sich mit einem Bereich 20 zusammenhängend um den Innenrand der Durchführungsöffnung 18 herum bis auf die Unterseite der Aluminiumscheibe 1. Auf der Unterseite der Aluminiumscheibe 1 bildet die Gummierung jedoch keinen vollständigen Kreisring, sondern lediglich drei sektorartige Randbereiche 21, 22, 23, die in entsprechenden Ausnehmungen 24, 25, 26 in der Oberseite der Kunststoffscheibe angeordnet sind, so daß die Kunststoffscheibe 3 mit ihrer Oberfläche trotz dem Durchspritzen der Gummierung in den übrigen Bereichen flächenbündig an der Unterseite der Aluminiumscheibe anliegt.

In gleichem Winkelabstand voneinander sind um die Durchführungsöffnung 19 in der Kunststoffscheibe 3 herum drei Vertiefungen 27, 28, 29 ausgebildet, in die hinein Abschnitte 30, 31 und 32 des Nietfußes 33 des Durchführungsniets 12 formschlüssig eingreifend niedergenietet sind. Durch diese Art der Nietung wird einerseits die Unterseite des Kopfflansches 13 des Durchführungsniets 12 dichtend auf die Oberseite der Elastomerschicht 2 gezwungen und wird andererseits gleichzeitig der Durchführungsniet 12 insgesamt gegen ein Verdrehen beim Einschrauben der elektrischen Anschlüsse in das Gewinde 15 gesichert.

Die untere Stirnseite des Nietfußes 33 des Durchführungsnietes 12 sowie entsprechend des Nietfußes 34 des Durchführungsnietes 11 stehen für Lötanschlüsse für das im Inneren des mit der Verbundabdeckscheibe verschlossenen Gehäuses befindliche elektrische Bauelement zur Verfügung. An der Unterseite der Kunststoffscheibe 3 ausgebildete Vorsprünge 35, 36, 37 dienen als elektrisch isolierende Abstandhalter zum Bauelement im Gehäuse.

Die Verbundabdeckscheibe weist weiterhin ein Überdrucksicherheitsventil in Form eines Berstmembranventils 38 auf. Als Berstmembran 39 dient ein geschwächter Bereich der Elastomerschicht 2 über einer Ventilöffnung 40 in der Aluminiumscheibe 1 und einer koaxial zu dieser angeordneten Ventilöffnung 41 in der Kunststoffscheibe 3. Die Gummierung 2 ist vollständig um den Innenrand der Ventilöffnung 40 in der Aluminiumscheibe 1 herum bis auf die gegenüberliegende Unterseite der Aluminiumscheibe 1 gezogen, wo die Gummierung in dem die Ventilöffnung 40 umgebenden Randbereich einen kreisringförmigen Abschnitt 42 bildet. Dieser Randbereich 42 liegt in einer Aussparung 43 der Kunststoffscheibe 3. In der nach oben weisenden, dem Elastomerring 42 zugekehrten Oberfläche weist die Ausnehmung 43 eine in sich geschlossen umlaufende Hochkante 44 auf, die in den Elastomerring 42 eingepreßt ist und diesen festhält. In die durch die Schwächung gebildete zylindrische Ausnehmung 45 in der Gummierung 2 greift ein domartiger Vorsprung 46 der Kunststoffscheibe 3 ein, in dem die Ventilöffnung 41 ausgebildet ist. Der domartige Vorsprung 46 zwingt die Gummierung 2, 42 gegen den Rand der Ventilöffnung 40 in der Aluminiumscheibe 1 und trägt damit zur Stabilisierung des Berstventils bei. Durch dieses Festlegen der Gummierung 2 ist gewährleistet, daß die Membran 39 beim Auftreten eines Überdrucks an der Unterseite der Abdeckscheibe bei reproduzierbaren Werten aufreißt.

Das in den Figuren 1 bis 4 gezeigte Ausführungsbeispiel einer Verbundabdeckscheibe ist für Elektrolytkondensatoren bis zu Temperaturen im Bereich von ungefähr 140 bis 150 °C einsetzbar.

In der insbesondere aus Fig. 1, aber auch aus Fig. 3 ersichtlichen Weise stehen die Ausnehmungen 24, 25, 26 auf der Oberseite der Kunststoffscheibe 3 zur Aufnahme der Gummierungssektoren 21, 22, 23 und die Aussparungen 27, 28, 29 auf der Unterseite der Kunststoffscheibe 3 zur Aufnahme der niedergenieteten Teile 30, 31, 32 des Fußes 33 des Durchführungsniets 12 zueinander auf Lücke, sind also in einer solchen Winkelverteilung zueinander angeordnet, daß sie sich in der senkrechten Projektion nicht überlappen.

**Ansprüche**

1. Verbundabdeckscheibe für das Gehäuse eines elektrischen Bauteils, insbesondere für ein aus Metall bestehendes einseitig offenes Bechergehäuse eines elektrischen Kondensators, bestehend aus einer einseitig auf einer Oberfläche vollständig, um den Außenrand herum und auf der gegenüberliegenden Oberfläche im Randbereich insgesamt zusammenhängend gummierten Aluminiumscheibe und einer Kunststoffscheibe, mit mindestens einer auch bei Druckbeaufschlagung gegen Gaspermeation und Flüssigkeitpermeation dichten elektrischen Durchführung, wobei die gummierte Aluminiumscheibe und die Kunststoffscheibe durch ein Durchführungselement in Richtung ihrer Normalen flächig gegeneinandergezwungen werden, dadurch gekennzeichnet, daß die Kunststoffscheibe (3) auf der nicht gummierten Oberfläche der Aluminiumscheibe (1) flächenbündig aufliegt und daß der Außenrand (6) der Kunststoffscheibe (3) bündig vom Innerand der Randbereichsgummierung (5) der Aluminiumscheibe (1) umschlossen ist.

2. Verbundabdeckscheibe nach Anspruch 1, dadurch gekennzeichnet, daß das Durchführungselement als separater Niet (11 ; 12) ausgebildet ist, dessen Kopf oder Kopfflansch (13) dichtend auf der gummierten Fläche (2) der Aluminiumscheibe (1) aufliegt, dessen Fuß (33) auf die freie Oberfläche der Kunststoffscheibe (3) niedergenietet (30, 31, 33) ist und dessen Schaft (17) eine in der Kunststoffscheibe (3) ausgebildete Öffnung (19) paßgenau und eine in der Aluminiumscheibe (1) ausgebildete Öffnung (18) mit so viel Spiel durchgreift, daß eine elektrische Isolierung zwischen dem Durchführungsniet (11 ; 12) und der Aluminiumscheibe (1) gewährleistet ist.

3. Verbundabdeckscheibe nach Anspruch 2, dadurch gekennzeichnet, daß die Aluminiumscheibe (1) von der flächig gummierten Seite (2) her insgesamt zusammenhängend um den Innenrand der Durchführungsöffnung (18) in der Aluminiumscheibe (1) herum und zumindest sektorweise (21, 22, 23), entsprechende Aussparungen (24, 25, 26) in der Kunststoffscheibe (3) ausfüllend, in dem die Durchführungsöffnung (18) in der Aluminiumscheibe (1) umgebenden Randbereich der der Kunststoffscheibe (3) zugewandten Oberfläche der Aluminiumscheibe (1) gummiert ist.

4. Verbundabdeckscheibe nach einem der Ansprüche 2 oder 3, dadurch gekennzeichnet, daß die freie Oberfläche der Aluminiumscheibe (1) mindestens zwei Vorsprünge (7) oder Ausnehmungen aufweist, die mit komplementären Ausnehmungen (8) oder Vorsprüngen in der anliegenden Oberfläche der Kunststoffscheibe (3) formschlüssig im Eingriff stehen.

5. Verbundabdeckscheibe nach einem der Ansprüche 2 bis 4, dadurch gekennzeichnet, daß auf der freien Oberfläche der Kunststoffscheibe (3) um die Durchführungsöffnung (19) herum mindestens eine Ausnehmung (27, 28, 29) ausgebildet ist, in die hinein der Nietfuß (33) formschlüssig niedergenietet (30, 31, 32) ist und daß der Kopf des Durchführungsniets (11 ; 12) ein Schraubgewinde (15) zur Herstellung eines elektrischen Anschlusses trägt.

6. Verbundabdeckscheibe nach einem der Ansprüche 1 bis 5, dadurch gekennzeichnet, daß die Aluminiumscheibe (1) auf ihrer vollständig gummierten Oberfläche Vorsprünge oder Rücksprünge (9) aufweist, die mit dem Elastomer der Gummierung (2) formschlüssig und vollständig im Eingriff (10) stehen.

7. Verbundabdeckscheibe nach den Ansprüchen 3 und 5, dadurch gekennzeichnet, daß die Kunststoffscheibe (3) im gleichen Winkelabstand voneinander drei sektorartige Aussparungen (24, 25, 26) zur Aufnahme der Randgummierungssektoren (21, 22, 23) der Aluminiumscheibe (1) im Bereich der Durchführungsöffnungen (18) und auf der gegenüberliegenden freien Oberfläche ebenfalls drei in gleichen Winkelabstand voneinander angeordnete Aussparungen (27, 28, 29) zur Aufnahme der niedergenieteten Teile (30, 31, 32) des Nietfußes (33) aufweist, und zwar in der Weise, daß die drei Aussparungen auf der einen Seite der Kunststoffscheibe (3) zu den drei Aussparungen auf der anderen Seite der Kunststoffscheibe auf Lücke stehen und sich in der senkrechten Projektion nicht überlappen.

8. Verbundabdeckscheibe nach einem der Ansprüche 1 bis 7, dadurch gekennzeichnet, daß jedes der elektrischen Durchführungselemente (11 ; 12) auf der gummierten Seite der Verbundabdeckscheibe mit einem vollständig umlaufenden, zargenartig hochstehenden Rand (16) umschlossen ist, der einstückig mit der Gummierung (2) und aus demselben Elastomer wie diese ausgebildet ist.

9. Verbundabdeckscheibe nach einem der Ansprüche 1 bis 8, dadurch gekennzeichnet, daß zur Bildung eines Berstventils (38) in der Aluminiumscheibe (1) eine durchgehende Öffnung (40) ausgebildet ist, in deren Bereich die Gummierung (2) geschwächt (39) ist, daß die Aluminiumscheibe (1) von der flächig gummierten Seite her insgesamt zusammenhängend um den Innenrand der Ventilöffnung (40) in der Aluminiumscheibe (1) herum und in dem die Ventilöffnung in der Aluminiumscheibe (1) umgebenden Randbereich (42) der der Kunststoffscheibe zugewandten Oberfläche der Aluminiumscheibe gummiert ist, daß in der anliegenden Oberfläche der Kunststoffscheibe (3) eine entsprechende Aussparung (43) vorgesehen ist, daß auf der der Aluminiumscheibe zugewandten Oberfläche der Aussparung (43) in der Kunststoffscheibe (3) eine in sich geschlossen umlaufende hochstehende Klemmwulst (44) ausgebildet ist, die dichtend und haltend in den die Ventilöffnung (40) in der Aluminiumscheibe (1) umgebenden Rand (42) der Gummierung (2) eingepreßt ist, und daß koaxial zur Ventilöffnung (40) in der Aluminiumscheibe (1) eine durchgehende Öffnung (41) in der Kunststoffscheibe (3) vorgesehen ist, deren Querschnitt kleiner als der Querschnitt der Ventilöffnung (40) in der Aluminiumscheibe (1) ist.

10. Verwendung der Verbundabdeckscheibe nach einem der Ansprüche 1 bis 9 in der Weise, daß die Kunststoffscheibe bei einem bestimmungsgemäß mit dieser Scheibe verschlossenen Gehäuse zum Inneren des Gehäuses weist.

### Claims

1. Composite cover plate for a compartment of an electric component especially for a metallic compartment open at one end, comprising an aluminium disc that is rubber-coated completely on one side of its surface, around the outer edge, and on the opposite surface in the edge area in a connected way, and a disc of synthetic polymer material, comprising at least one tight electric lead-through element resistent to gas and fluid permeation even under pressure, wherein the rubber-coated aluminium disc and the disc of synthetic polymer material over the lead-through element are forced in the direction of their normal line towards the areas of each other characterized in that the disc (3) of synthetic polymer material lies tightly against the non-rubberized surface of the aluminium disc (1) and that the outer border (6) of the disc (3) of synthetic polymer material is enclosed in tight fashion by the inner border of the edge-area rubber coating (5) of the aluminium disc (1).

2. Composite cover plate according to claim 1, characterized in that the lead-through element is formed as a separate rivet (11, 12) whose head or head flange lies tightly and sealing on the rubberized surface (2) of the aluminium disc (1), whose foot (33) is riveted onto the free surface of the disc of synthetic polymer material (30, 31, 33) and whose shaft (17) traverses snugly fitting an opening (19) formed in the disc of synthetic polymer material (3), and an opening (18) in the aluminium disc (1) with enough leeway to provide for electric insulation between the lead-through rivet (11, 12) and the aluminium disc (1).

3. Composite cover plate according to claim 2, characterized in that the aluminium disc (1) is rubber-coated in an overall connected way from the rubber-coated surface (2) around the inner border of the lead-through opening (18) and at least in segments (21, 22, 23), filling out the corresponding recesses (24, 25, 26) in the border areas encircling the lead-through opening (18) in the aluminium disc on the surface facing the disc (3) of synthetic polymer material.

4. Composite cover plate according to claims 2 or 3, characterized in that the free surface of the aluminium disc (1) is provided with at least two protrusions (7) or recesses, which fit snugly into complementary recesses (8) or protrusions in the adjoining surface of the disc of synthetic polymer material (3).

5. Composite cover plate according to one of the claims 2 to 4, characterized in that there is provided at least one recess (27, 28, 29) on the free surface of the disc of synthetic polymer material (3) around the lead-through opening (19), into which the rivet foot (33) is tightly riveted (30, 31, 32) and that the head of the lead-through rivet (11, 12) bears a threaded screw (15) for connecting an electrical line.

6. Composite cover plate according to one of claims 1 to 5, characterized in that the aluminium disc (1) is provided on its wholly rubberized surface with protrusions or recesses (9) which are in complete, locking engagement (10) with the elastomers of the rubber coating (2).

7. Composite cover plate according to claims 3 and 5, characterized in that the disc of synthetic polymer material (3) is provided, at equal angle distances from each other, with three sector-type recesses (24, 25, 26) for receiving the border-rubberization segments (21, 22, 23) of the aluminium disc (1) in the area of the lead-through openings (18) and on the oppositely lying free surface also with three recesses (27, 28, 29) at equal angle distances from each other for receiving the riveted-down parts (30, 31, 32) of the rivet foot (33), respectively in such a manner that the three recesses on one side of the disc of synthetic polymer material (3) are staggered in relation to the recesses on the other side of the disc of synthetic polymer material and do not overlap in the perpendicular projection.

8. Composite cover plate according to one of claims 1 to 7, characterized in that each of the electric lead-through elements (11, 12) on the rubber-coated side of the composite cover plate is enclosed by a completely encircling raised rimmed edge (16) which is formed in one piece with the rubber caoting (2) from the same elastomer as the rubber coating.

9. Composite cover plate according to one of claims 1 to 8, characterized in that for the formation of a burstable valve (38) in the aluminium disc (1) a traversing opening (40) is provided, in whose area the rubber coating (2) is weakened (39), that the aluminium disc (1) is rubber-coated in an overall connected way from the rubber-coated surface, around the inner border of the valve opening (40) in the aluminium disc (1) and in the border area (42) encircling the valve opening in the aluminium disc (1) on the surface facing the disc of synthetic polymer material, that a corresponding recess (43) is provided in the adjoining surface of the disc of synthetic polymer material (13), that on the surface of the recess (43) in the disc of synthetic polymer material (3) facing the aluminium disc, there is provided a closed, raised encircling ring which in lasting and sealing fashion is pressed into the border (42) of the rubber coating (2) encircling the valve opening (40) in the aluminium disc (1), and that coaxially to the valve opening (40) in the aluminium disc (1), there is provided a traversing opening (41) in the disc of synthetic polymer material (3), whose cross-section is smaller than the cross-section of the valve opening (40) in the aluminium disc (1).

10. Application of the composite cover plate according to one of claims 1 to 9 in a way such that the disc of synthetic polymer material when the composite cover plate of this invention is used for a closed compartment will face the inside of the compartment.

**Revendications**

1. Couvercle composite pour l'enveloppe d'un élément d'appareil électrique, notamment pour l'enveloppe métallique, en forme de coupe ouverte d'un côté, d'un condensateur électrique, constitué par un disque d'aluminium recouvert de caoutchouc sur la totalité de l'une de ses faces, sur tout son pourtour, et sur la zone marginale de son autre face, et par un disque de matière plastique et traversé par au moins un élément de passage électrique imperméable aux gaz et aux liquides, le disque d'aluminium recouvert de caoutchouc et le disque de matière plastique étant serrés l'un contre l'autre, dans la direction de la normale à leurs surfaces, par une partie de l'élément de passage, caractérisé en ce que le disque de matière plastique (3) s'applique étroitement sur la surface du disque d'aluminium (1) qui n'est pas recouverte de caoutchouc et que le bord extérieur (6) du disque de matière plastique (3) est étroitement enserré par le bord intérieur du revêtement de caoutchouc (5) qui recouvre la zone marginale du disque d'aluminium (1).

2. Couvercle composite selon la revendication 1, caractérisé en ce que l'élément de passage a la forme d'un rivet séparé (11, 12) dont la tête ou la bride de tête (1) s'appuie d'une manière étanche sur la surface (2) recouverte de caoutchouc du disque d'aluminium (1), dont la base (33) est rivée (30, 31, 33) sur la surface libre du disque de matière plastique (3) et dont la tige (17) s'engage exactement dans une ouverture (19) ménagée dans le disque de matière plastique (3) et s'engage dans une ouverture (18) ménagée dans le disque d'aluminium (1) avec suffisamment de jeu pour que l'isolation électrique entre le rivet de passage (11, 12) et le disque d'aluminium (1) soit assurée.

3. Couvercle composite selon la revendication 2, caractérisé en ce que le disque d'aluminium (1) est recouvert d'une manière continue, à partir de sa face (2) recouverte de caoutchouc, d'une couche de caoutchouc qui s'étend sur le bord intérieur de l'ouverture de passage (18) ménagée dans le disque d'aluminium (1) et au moins dans certains secteurs (21, 22, 23), en remplissant des évidements correspondants (24, 25, 26) ménagés dans le disque en matière plastique (3), sur la zone marginale de la surface du disque d'aluminium (1) située du côté du disque de matière plastique (3) qui entoure l'ouverture de passage (18) ménagée dans le disque d'aluminium (1).

4. Couvercle composite selon l'une des revendications 2 ou 3, caractérisé en ce que la surface libre du disque d'aluminium (1) comporte au moins deux parties en saillie (7) ou en retrait qui sont en prise avec des parties en retrait (8) ou en saillie correspondantes de formes complémentaires ménagées dans la surface opposée du disque de matière plastique (3).

5. Couvercle composite selon l'une des revendications 2 à 4, caractérisé en ce que la surface libre du disque de matière plastique (3) comporte, autour de l'ouverture de passage (19), au moins un évidement (27, 28, 29) dans lequel la base de rivet (33) pénètre exactement et est rivetée (30, 31, 32) et en ce que la tête du rivet de passage (11, 12) porte un filetage (15) permettant un raccord électrique.

6. Couvercle composite selon l'une des revendications 1 à 5, caractérisé en ce que le disque d'aluminium (1) comporte, sur sa surface complètement recouverte de caoutchouc, des parties en saillie ou en retrait (9) qui s'adaptent exactement à l'élastomère de la couche (2) et sont complètement en prise (10) avec lui.

7. Couvercle composite selon l'une des revendications 3 ou 5, caractérisé en ce que le disque en matière plastique (3) comporte, séparés les uns des autres par des distances angulaires égales, trois évidements en forme de secteurs (24, 25, 26) dans lesquels se logent les secteurs du bord de caoutchouc (21, 22, 23) du disque d'aluminium (1) dans la zone des ouvertures de passage (18) et, sur sa face libre opposée, également trois évidements (27, 28, 29), séparés les uns des autres par des distances angulaires égales dans lesquels se logent les parties rivetées (30, 31, 32) de la base (33) du rivet, de telle sorte que les trois évidements ménagés sur l'un des côtés du disque de matière plastique (3) sont à une certaine distance des trois évidements ménagés de l'autre côté du disque de matière plastique (3) et ne se recouvrent pas en projection verticale.

8. Couvercle composite selon l'une des revendications 1 à 7, caractérisé en ce que chacun des éléments de passage électriques (11, 12) est entouré, du côté du couvercle composite recouvert de caoutchouc, d'un bord périphérique complet (16) formant rebord élevé qui est réalisé d'une seule pièce avec la couche de caoutchouc (2) et est constitué par le même élastomère.

9. Couvercle composite selon l'une des revendications 1 à 8, caractérisé en ce que, pour réaliser une soupape d'éclatement (38) dans le disque d'aluminium on réalise une ouverture (40) qui le traverse et au niveau de laquelle la couche de caoutchouc (2) est amincie (39), en ce que le disque d'aluminium (1) est recouvert, d'une manière continue, à partir de sa face recouverte de caoutchouc, d'une couche de caoutchouc qui s'étend sur le bord intérieur de l'ouverture de soupape (10) ménagée dans le disque d'aluminium (1) et sur la zone marginale (42) de la surface du disque d'aluminium située du côté du disque de matière plastique qui entoure l'ouverture de soupape ménagée dans le disque d'aluminium (1), en ce que la surface voisine du disque de matière première (3) comporte un évidement correspondant (43), en ce que la surface de l'évidement (43) ménagé dans le disque de matière plastique (3) qui est du côté du disque d'aluminium comporte un bourrelet de serrage (44) périphérique haut et fermé sur lui-même qui est introduit d'une manière étanche et par pression dans le bord (42) de la couche de caoutchouc (2) qui entoure l'ouverture de soupape (40) ménagée dans le disque d'aluminium (1) et en ce que le disque d'aluminium (1) comporte une ouverture (41), de même axe que l'ouverture de soupape (40), qui traverse le disque de matière plastique (3) et dont la section est plus petite que la section de l'ouverture de soupape (40) ménagée dans le disque d'aluminium (1).

10. Utilisation du couvercle composite selon l'une des revendications 1 à 9 dans des conditions telles que, lorsqu'il est placé sur une enveloppe normalement fermée par ce couvercle, le disque de matière plastique est tourné vers l'intérieur de l'enveloppe.

0 065 021

Fig. 1

Fig. 2

Fig. 3

Fig. 4

1